# EUROPEAN PATENT APPLICATION

(11) **EP 2 615 515 A1**
(43) Date of publication of application: **17.07.2013**
(21) Application number: 11823711.4
(22) Date of filing: 09.06.2011
(51) Int. Cl.: G05D 16/20, G01F 23/00

(54) **PRESSURE-TANK WATER-LEVEL CONTROL METHOD IN A PIPING SYSTEM USING A LEVEL TRANSMITTER AND A LEVEL SWITCH**

(30) Priority: 09.09.2010 KR 20100088217
(71) Applicant: Flowtech Co., Ltd., Incheon 403-030 (KR); Yang, Jae Gu, Incheon 405-220 (KR)
(72) Inventor: YANG, Jae Gu, Incheon 405-220 (KR); YANG, Ji Suk, Incheon 405-220 (KR)
(74) Representative: Gulde Hengelhaupt Ziebig & Schneider
(86) International application number: PCT/KR2011/004220
(87) International publication number: WO 2012/033278

(57) **Abstract**

Disclosed herein is a method of controlling a water level of a pressure tank of a piping system. The piping system includes the pressure tank, a level transmitter, a first level switch disposed on a low-level-alarm line, a second level switch disposed between the low-level-alarm line and a lower limit line of an optimal level range, a third level switch disposed between a high-level-alarm line and an upper limit line of the optimal level range, and a fourth level switch disposed on a high-level-alarm line. The method includes receiving a level measurement value from the level transmitter; receiving and checking ON/OFF signals of the level switches; comparing the level measurement value with the ON/OFF signals; determining whether an abnormality has occurred in the level transmitter, and determining whether to raise or lower the water level; and supplying gas to the pressure tank or exhausting gas therefrom.

## Description

### Technical Field

The present invention relates, in general, to methods of controlling water levels of pressure tanks and, more particularly, to a method of precisely and reliably controlling the water level of a pressure tank, such as an expansion tank or a water hammering prevention tank, used in a piping system in such a way as to sense whether an abnormality has occurred in a level transmitter which measures the water level of the pressure tank.

### Background Art

Generally, circulation piping systems for air-conditioning or piping systems for fluid transfer include a pressure tank (the former case is referred to as an anti water hammering tank, and the latter case as an expansion tank) so as to prevent sharp variations in flow rate and pressure when a pump suddenly stops or a valve is suddenly closed from causing water hammering or preventing the expansion of water in a circulation piping system from damaging the piping system. In such a pressure tank, gas is present above the surface of water in the tank. Because of the characteristics resulting from the gas being a compressible fluid, when expansion or water hammering occurs in the piping system, the gas absorbs shock waves or draws water into the piping system to prevent the pressure in the pipe from dropping. Depending on the water level of the pressure tank, the volume of gas in the tank is set. Therefore, precisely and reliably controlling the water level of the pressure tank to an appropriate level puts an energy source in reserve to ensure the stability of the system against expansion or water hammering pressure waves. Variation in the water level of the pressure tank means variation in a reference pressure of the entirety of the piping system. An increase in pressure may damage the equipment or pipes of the piping system. If the pressure drops below the saturation vapor pressure of water, shock waves caused when a water column returns after the water column has been separated may damage the equipment or pipes. Therefore, to keep the piping system stable, the water level of the pressure tank must always be controlled such that it is maintained within an appropriate level range. The control of the water level of the pressure tank can be carried out by supplying gas such as air or nitrogen into the pressure tank or exhausting gas therefrom.

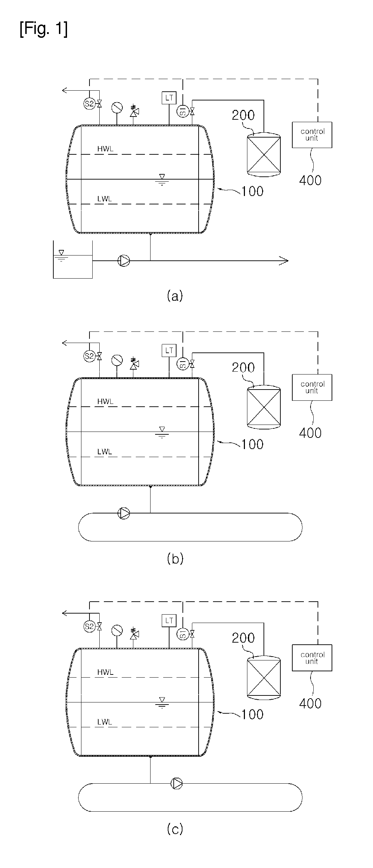

In detail, as shown in Fig. 1 (a), in an anti-water hammering device for an open piping system whose purpose is to maintain the water level of a pressure tank within an appropriate level range, a level transmitter LT senses the water level of the pressure tank 100 in real time. If the water level rises, a control unit 400 opens a supply valve S1 so that a gas supply device 200 supplies gas into the pressure tank 100, thereby lowering the water level to the appropriate level. If the water level lowers, an exhaust valve S2 opens so that gas is exhausted out of the pressure tank 100, thus raising the water level to the appropriate level. Furthermore, as shown in Figs. 1 (b) and 1 (c), even in an expansion tank system of a circulation piping system (a one-way piping system having an open-end tank or a circulation piping system having a heat storage tank), the water level of a tank is controlled in the above-mentioned manner based on the expansion and contraction of pipe water. For reference, the general construction of the systems of Figs. 1 (b) and 1 (c), with the only exception of the connection locations of the pressure tanks, are the same, so that their methods for controlling the water level are also the same.

As such, the level transmitter must be provided on the pressure tank to control the water level of the pressure tank. In such a conventional system, a single level transmitter is provided for each pressure tank. However, if an error occurs in the level transmitter or it malfunctions, more gas is supplied into or exhausted from the pressure tank than is needed so that the working pressure of the system varies, thus causing not only the anti-water hammering device to fail or the expansion control device to fail but also causing variations in the pressure of the entirety of the piping system. As a result, the purposes of the anti-water hammering device and the expansion control device, that is, prevention of high or low pressure surge (water hammering) and control of expansion of water attributable to temperature variation, may not be achieved.

To solve the above problems, in such piping systems as a regional air-conditioning piping system, a liquid transfer system and a plant, where high reliability is required, there has been proposed a method, in which multiple level transmitters precisely and reliably control the water level of a pressure tank in such a way as to detect whether an abnormality, failure or error has occurred in any level transmitter and to cope with such failures.

However, such a level transmitter frequently malfunctions, reducing the reliability of the measured water level. Furthermore, the level transmitter is comparatively expensive. Thus, if multiple level transmitters are used, the cost of equipment and maintenance excessively increases.

### Disclosure

### Technical Problem

Accordingly, the present invention has been made keeping in mind the above problems occurring in the conventional method of controlling the water level of a pressure tank of a piping system, and an object of the present invention is to provide a control method which can control the water level of a pressure tank in response to actual conditions of a piping system in such a way that whether an abnormality has occurred in a level transmitter is determined and if it is determined to be abnormal, a level measurement value of the level transmitter is excluded.

### Technical Solution

In order to accomplish the above object, the present invention provides a method of controlling a water level of a pressure tank provided in a piping system, the piping system including: the pressure tank provided for water hammering prevention control or expansion control; a level transmitter measuring a water level of the pressure tank; a first level switch disposed on a low-level-alarm line of the pressure tank; a second level switch disposed between the low-level-alarm line and a lower limit line of an optimal level range; a third level switch disposed between a high-level-alarm line of the pressure tank and an upper limit line of the optimal level range; a fourth level switch disposed on the high-level-alarm line of the pressure tank; and a gas supply device supplying gas to the pressure tank, the method including: receiving a level measurement value of the pressure tank from the level transmitter; receiving and checking ON/OFF signals of the level switches; comparing the level measurement value of the level transmitter with the ON/OFF signals of the level switches, determining whether an abnormality has occurred in the level transmitter, and determining whether to raise or lower the water level of the pressure tank; and supplying gas to the pressure tank or exhausting gas from the pressure tank based on a result of the determination of whether to raise or lower the water level and the ON/OFF signals of the level switches.

When the level measurement value of the level transmitter is within the optimal level range of the pressure tank and both the third level switch and the fourth level switch are in the ON state, the water level of the pressure tank may be determined to have increased to over the optimal level range, and gas may be supplied to the pressure tank to lower the water level of the pressure tank.

The supply of gas to the pressure tank may continue until the second level switch is turned ON or for a preset time to adjust the water level of the pressure tank to the optimal level range.

When the level measurement value of the level transmitter is within the optimal level range of the pressure tank and both the third level switch and the fourth level switch are in the OFF state, if both the first level switch and the second level switch are in the ON state, the level transmitter may be determined to be normal, so that the water level of the pressure tank is kept in a current state, and if at least one of the first level switch and the second level switch is in the OFF state, the level transmitter may be determined to be abnormal, and it may be determined that the water level of the pressure tank has been lowered below the optimal level range, so that gas is exhausted out of the pressure tank to raise the water level of the pressure tank.

The exhausting of gas from the pressure tank may continue until the third level switch turns ON or for a preset time to adjust the water level of the pressure tank to the optimal level range.

### Advantageous Effects

In the present invention, a level transmitter and multiple level switches are installed parallel to each other. Whether an abnormality has occurred in the level transmitter is determined depending on signals of the level switches. If the level transmitter is determined to be abnormal, a level measurement value of the level transmitter is excluded, and the water level of a pressure tank is controlled based on the signals of the level switches. Therefore, the present invention can precisely and reliably control the water level of the pressure tank in response to the actual conditions of the system. Further, the present invention can prevent malfunctioning of the level transmitter from causing the piping system to lose control of the pressure, thus fundamentally preventing an accident such as an explosion of the pipe.

### Description of Drawings

Fig. 1 is of views showing the construction of a piping system provided with a conventional pressure tank;
Fig. 2 is a view showing the construction of a piping system including a pressure tank provided with a level transmitter and multiple level switches, according to a preferred embodiment of the present invention;
Fig. 3 is a schematic view showing ranges within which the level transmitter and the level switches sense the water level, and methods of outputting measurements of the water level;
Fig. 4 is a flowchart of a method of controlling the water level of the pressure tank according to the present invention; and
Fig. 5 is a table showing in detail a method of, when a level measurement value of the level transmitter is in an optimal level range, determining whether an abnormality occurs in the level transmitter depending on the level measurement value of the level transmitter and ON/OFF signals of the level switches, and a method of controlling the water level of the pressure tank based on the signals and the value of the measurement.

### <Description of the Reference Numerals in the Drawings>

100: pressure tank 200: gas supply device
400: control unit LT: level transmitter
LS1: first level switch LS2: second level switch
LS3: third level switch LS4: fourth level switch

### Best Mode

Hereinafter, a preferred embodiment of a method of controlling a water level of a pressure tank of a piping system using a level transmitter and level switches according to the present invention will be described in detail with reference to the attached drawings.

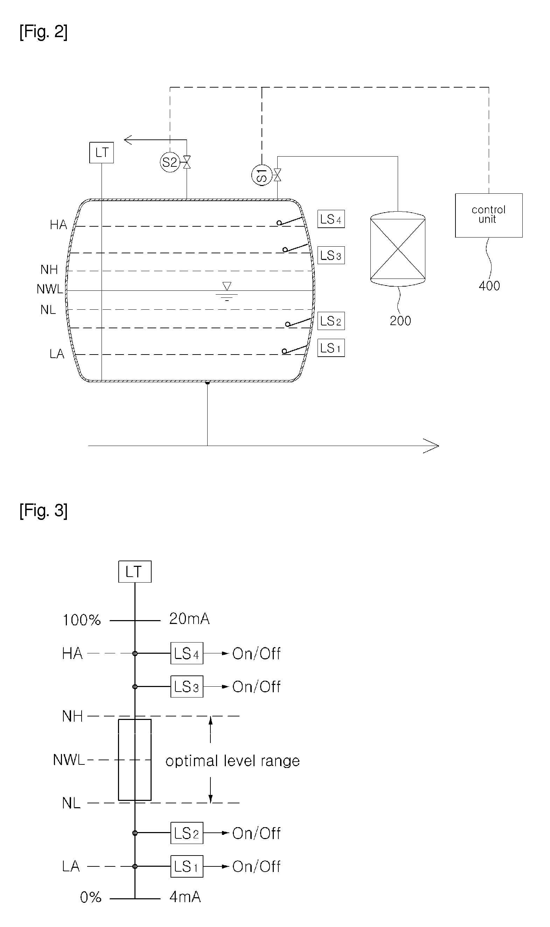

Fig. 2 illustrates an example of a piping system including a pressure tank 100 according to the preferred embodiment of the present invention. As shown in Fig. 2, the piping system according to the present invention includes the pressure tank 100 provided with a single level transmitter LT and four level switches LS1, LS2, LS3 and LS4.

As stated above, the water level of the pressure tank 100 of the piping system must be within an optimal level range to maintain the piping system in a steady state. Given this, in Fig. 2, NWL (Normal Water Level) denotes an intermediate water level that is a general optimal level, and NH (Normal High) and NL (Normal Low) respectively denote an upper limit level line and a lower limit level line of the optimal level range.

The level transmitter LT is installed such that it can measure the water level of the pressure tank 100 over the distance of the entire height of the pressure tank 100. The level switches comprises a first level switch LS1 which is disposed on a low-level-alarm line LA, a second level switch LS2 which is disposed between the low-level-alarm line LA and the lower limit line NL of the optimal level range, a third level switch LS3 which is disposed between a high-level-alarm line HA of the pressure tank and the upper limit line NH of the optimal level range, and a fourth level switch LS4 which is disposed on the high-level-alarm line HA.

Fig. 3 schematically illustrates level sensing ranges of the level transmitter and the level switches and methods of outputting measurements. As shown in the drawing, the level transmitter LT is one kind of analog sensor and is able to measure the water level (from 0% to 100%) over the distance of the entire height of the pressure tank. The measurement value of the level transmitter LT is output as a current value ranging from 4 mA to 20 mA. Each level switch is one kind of digital sensor and is configured such that when the water level reaches a corresponding level value, a contact point is closed by means of a float or the like. In this way, the level switch outputs an ON/OFF signal.

The level transmitter LT is a sensor that measures the water level value by using a float or measuring the conductivity value. The level transmitter LT can precisely measure the water level value in real time but is disadvantageous in that its failure rate is comparatively high. On the other hand, the level switch is operated in a manner using a contact point. Thus, the level switch can determine only whether the water level has reached a corresponding level and it cannot measure the water level in real time, yet has the advantages of a comparatively low failure rate and being inexpensive. Therefore, the present invention uses only one level transmitter LT which has a comparatively high failure rate and is expensive while using multiple level switches which have a comparatively low failure rate and are inexpensive, thus making up for the weakness of the level transmitter LT and strengthening the advantages of the level switches. Thereby, the present invention makes it possible to reliably control the water level of the pressure tank at low costs.

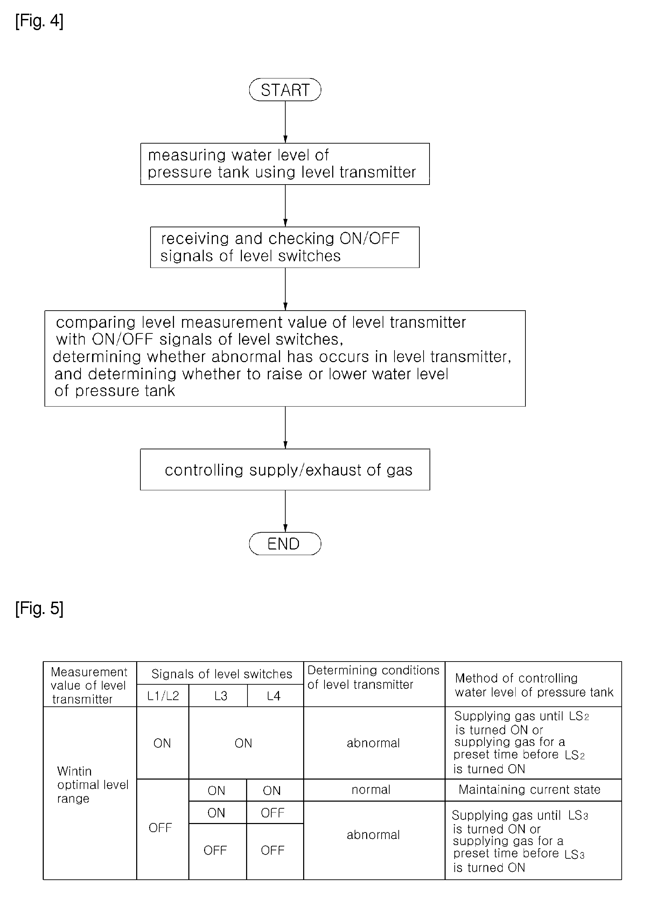

Fig. 4 is a flowchart of a method of controlling the water level of the pressure tank 100 according to the present invention. Fig. 5 is a table showing in detail the method of controlling the pressure tank 100 as a function of the output signals of the level transmitter LT and the level switches.

As shown in Fig. 4, to control the water level of the pressure tank 100, a control unit 400 receives a measurement signal (ranging from 4 mA to 20 mA) of the water level of the pressure tank 100 from the level transmitter LT, converts the signal into a water-level value (hereinafter, referred to as a 'level measurement value'), and then displays it on a display means which is separately provided. Further, the control unit 400 checks ON/OFF signals of the level switches which are disposed at positions corresponding to predetermined water levels.

Subsequently, the control unit 400 compares the level measurement value of the level transmitter LT with the ON/OFF signals of the switches and determines whether there is an abnormality in the level transmitter LT. The control unit 400 thereafter determines whether the actual water level of the pressure tank 100 has increased or gone down, and then controls the supply of gas into the pressure tank 100 or the exhausting of gas therefrom based on the result of the determination and the signals of the level switches. Below, a method of the determination and a method of supplying or exhausting gas will be explained in detail with reference to Figs. 3 and 5.

First, if it is said that the level measurement value of the level transmitter LT is within the optimal level range of the pressure tank 100, because the water level of the pressure tank 100 is between the lower limit line NL and upper limit line NH of the optimal level range, the third level switch LS3 and the fourth level switch LS4 must be in the OFF state in theory. However, despite the fact that the level measurement value of the level transmitter LT is within the optimal level range of the pressure tank 100, as shown in Fig. 5, if both the third level switch LS3 and the fourth level switch LS4 are in the ON state, the first level switch LS1 and the second level switch LS2 are in the ON state, of course. In this case, it is clear that an abnormality has occurred in the level transmitter LT. The control unit 400 determines that an abnormality has occurred in the level transmitter LT.

As such, although the level measurement value of the level transmitter LT is within the optimal level range, if both the third level switch LS3 and the fourth level switch LS4 are in the ON state, the control unit 400 determines that the actual water level of the pressure tank 100 increases over the optimal level range, and opens a supply valve S1 so that gas is supplied from a gas supply device 200 to the pressure tank 100, thus reducing the water level of the pressure tank 100. Here, the supply of gas to the pressure tank 100 must continue until the water level of the pressure tank 100 is within the optimal level range. However, if an abnormality has occurred in the level transmitter LT, it cannot precisely measure the water level of the pressure tank 100. Therefore, in this case, it is preferable that the supply of gas continue until the second level switch LS2 that is adjacent to the lower limit line of the optimal level range is turned ON, or the supply valve open for a preset time so that an appropriate amount of gas is supplied to the pressure tank. Here, the preset time can be previously determined by experiments for adjusting the water level of the pressure tank to the optimal level range based on the capacity of the pressure tank 100, the height between the fourth level switch LS4 and the upper limit line of the optimal level range, a gas supply rate, a rate of variation of the water level depending on the gas supply rate, etc.

If it is expressed that the level measurement value of the level transmitter LT is within the optimal level range of the pressure tank 100 and both the third level switch LS3 and the fourth level switch LS4 are in the OFF state, whether an abnormality has occurred in the level transmitter LT is determined depending on whether the first level switch LS1 and the second level switch LS2 are in the ON state or in the OFF state.

In detail, as shown in Fig. 5, if both the first level switch LS1 and the second level switch LS2 are in the ON state while both the third level switch LS3 and the fourth level switch LS4 are in the OFF state, the level transmitter LT is determined to be normal, and the water level of the pressure tank is maintained in its current state.

On the other hand, if at least one of the first level switch LS1 and the second level switch LS2 is in the OFF state while both the third level switch LS3 and the fourth level switch LS4 are in the OFF state, the level transmitter LT is determined to be abnormal.

As such, in the case where both the third level switch LS3 and the fourth level switch LS4 are in the OFF state, and at least one of the first level switch LS1 and the second level switch LS2 is in the OFF state, the control unit 400 determines that the actual water level of the pressure tank 100 has decreased below the optimal level range, and then opens an exhaust valve S2 so that gas is exhausted from the pressure tank 100, thus increasing the water level of the pressure tank 100. Here, the exhaust of gas from the pressure tank 100 must continue until the water level of the pressure tank 100 is within the optimal level range. However, if an abnormality has occurred in the level transmitter LT, it cannot precisely measure the water level of the pressure tank 100. Therefore, in this case, it is preferable that the exhaust of gas continue until the third level switch LS3 that is adjacent to the upper limit line of the optimal level range is turned ON, or the exhaust valve opens for a preset time so that an appropriate amount of gas is exhausted from the pressure tank. Here, the preset time can be previously determined by experiments done into adjusting the water level of the pressure tank to the optimal level range based on the capacity of the pressure tank 100, the height between the lower limit line of the optimal level range and the first level switch LS1 or the second level switch LS2, a gas exhaust rate, a rate of variation of the water level depending on the gas exhaust rate, etc.

Meanwhile, the present invention aims to avoid the risk which may be caused when variations in the pressure of the piping system are not properly responded to as a result of an event in which: despite the fact that the actual water level of the pressure tank 100 drops below the optimal level range or increases over it, an abnormality that has occurred in the level transmitter LT causes it to say that the level measurement value of the level transmitter LT is within the optimal level range, so the pressure tank 100 maintains its current conditions. Therefore, in the present invention, the case where the level measurement value of the level transmitter LT is not within the optimal level range is left out of the discussion.

However, if the level measurement value of the level transmitter LT is not within the optimal level range, the water level of the pressure tank 100 is controlled based on the level measurement value of the level transmitter LT; however, the level measurement value of the level transmitter LT must be compared with the ON/OFF signals of the level switches to determine whether an abnormality has occurred in the level transmitter LT. As a result, if the level transmitter LT is determined to be abnormal, the water level of the pressure tank is controlled based on the ON/OFF signals of the level switch in such a way that when it is determined that the water level of the pressure tank 100 has increased excessively, gas is supplied to the pressure tank 100 until the second level switch LS2 is turned ON or for a preset time, and when the water level of the pressure tank 100 is determined to be excessively reduced, gas is exhausted from the pressure tank 100 until the third level switch LS3 is turned ON or for a preset time.

Although the supply of gas to the pressure tank or the exhaust of it therefrom have been illustrated as being realized by opening the supply valve or the exhaust valve, if the system is comparatively small, it may be realized using just a compressor of the gas supply device without having a separate supply valve or exhaust valve. As such, the method of controlling the water level of the pressure tank according to the present invention can be applied to a small piping system that does not have a separate valve.

While the preferred embodiment of the present invention has been disclosed for illustrative purposes, it will be appreciated that the scope of the invention is not limited thereto, and any and all modifications, variations or equivalent arrangements which can be derived from the embodiment should be considered to be within the scope of the invention.

## Claims

1. A method of controlling a water level of a pressure tank provided in a piping system, the piping system comprising: the pressure tank provided for water hammering prevention control or expansion control; a level transmitter measuring a water level of the pressure tank; a first level switch disposed on a low-level-alarm line of the pressure tank; a second level switch disposed between the low-level-alarm line and a lower limit line of an optimal level range; a third level switch disposed between a high-level-alarm line of the pressure tank and an upper limit line of the optimal level range; a fourth level switch disposed on the high-level-alarm line of the pressure tank; and a gas supply device supplying gas to the pressure tank, the method comprising:
receiving a level measurement value of the pressure tank from the level transmitter;
receiving and checking ON/OFF signals of the level switches;
comparing the level measurement value of the level transmitter with the ON/OFF signals of the level switches, determining whether an abnormality has occurred in the level transmitter, and determining whether to raise or lower the water level of the pressure tank; and
supplying gas to the pressure tank or exhausting gas from the pressure tank based on a result of the determination of whether to raise or lower the water level and the ON/OFF signals of the level switches.

2. The method according to claim 1, wherein when the level measurement value of the level transmitter is within the optimal level range of the pressure tank and both the third level switch and the fourth level switch are in the ON state, the water level of the pressure tank is determined to have increased to over the optimal level range, and gas is supplied to the pressure tank to lower the water level of the pressure tank.

3. The method according to claim 2, wherein the supply of gas to the pressure tank continues until the second level switch is turned ON.

4. The method according to claim 2, wherein the supply of gas to the pressure tank continues for a preset time to adjust the water level of the pressure tank to the optimal level range.

5. The method according to claim 1, wherein when the level measurement value of the level transmitter is within the optimal level range of the pressure tank and both the third level switch and the fourth level switch are in the OFF state,
if both the first level switch and the second level switch are in the ON state, the level transmitter is determined to be normal, so that the water level of the pressure tank is kept in a current state, and
if at least one of the first level switch and the second level switch is in the OFF state, the level transmitter is determined to be abnormal, and it is determined that the water level of the pressure tank has been lowered below the optimal level range, so that gas is exhausted out of the pressure tank to raise the water level of the pressure tank.

6. The method according to claim 5, wherein the exhausting of gas from the pressure tank continues until the third level switch turns ON.

7. The method according to claim 5, wherein the exhausting of gas from the pressure tank continues for a preset time to adjust the water level of the pressure tank to the optimal level range.
